## Europäisches Patentamt

## European Patent Office

## Office européen des brevets

(11) Veröffentlichungsnummer: **0 238 912**

**A2**

## (12) EUROPÄISCHE PATENTANMELDUNG

(21) Anmeldenummer: 87103212.4

(22) Anmeldetag: 06.03.87

(51) Int. Cl.⁴: **H02B 1/04**

(30) Priorität: 26.03.86 DE 3610152

(43) Veröffentlichungstag der Anmeldung:
30.09.87 Patentblatt 87/40

(84) Benannte Vertragsstaaten:
**AT BE CH ES FR GB GR IT LI LU NL SE**

(71) Anmelder: **Rittal-Werk Rudolf Loh GmbH & Co. KG**
**Auf dem Stützelberg**
**D-6348 Herborn(DE)**

(72) Erfinder: **Bernhard, Jürgen**
**Am Minzeborn 5**
**D-6342 Haiger-Rodenbach(DE)**

(74) Vertreter: **Vogel, Georg**
**Hermann-Essig-Strasse 35**
**D-7141 Schwieberdingen(DE)**

(54) **Vorrichtung zum Befestigen eines Schaltkastens oder dgl. an einem Rund- oder Vierkantprofilabschnitt.**

(57) Die Erfindung betrifft eine Vorrichtung zum Befestigen eines Schaltkastens oder dgl. an einem Rund- oder Vierkantprofilabschnitt, bei der die Befestigungsfläche des Schaltkastens oder dgl. mindestens einen C-Profilschienenabschnitt trägt, mit dem die Enden eines den Rund-oder Vierkantprofilabschnitt umschließenden Haltebügels unter Verspannung an dem Rund-oder Vierkantprofilabschnitt verbindbar sind. Pro Verbindung stützt sich der Rund-oder Vierkantprofilabschnitt an zwei besonders gestalteten Tragbügeln ab, die im Abstand zueinander eingestellt und arretiert werden können. Zwei Spannwinkel werden an einem mit Vierkantdurchbrüchen versehenen Spannbandabschnitt eingehängt und auf Gewindebolzen mittels Stellmuttern so weit verstellt, bis sich der Spannbandabschnitt an dem Rund-oder Vierkantprofilabschnitt unter Spannung anlegt. Die Gewindebolzen dienen gleichzeitig zur Einstellung des Abstandes der Tragbügel und ihrer Arretierung an dem C-Profilschienenabschnitt.

FIG.1

## Vorrichtung zum Befestigen eines Schaltkastens oder dgl. an einem Rund-oder Vierkantprofilabschnitt

Die Erfindung betrifft eine Vorrichtung zum Befestigen eines Schaltkastens oder dgl. an einem Rund-oder Vierkantprofilabschnitt, bei der Befestigungsfläche des Schaltkastens oder dgl. mindestens einen C-Profilschienenabschnitt trägt, mit dem die Enden eines den Rund-oder Vierkantprofilabschnitt umschließenden Haltebügels unter Verspannung an dem Rund-oder Vierkantprofilabschnitt verbindbar sind.

Bei den bekannten Vorrichtungen dieser Art ist der Haltebügel als Formteil ausgebildet, das an die Größe und Form des Rund-oder Vierkantprofilabschnittes angepaßt ist, wie z.B. die DE-PS 22 15 707 zeigt. Da bei der Anbringung eines Schaltkastens oder dgl. die unterschiedlichsten Profilabschnitte verwendet werden, ist auch eine entsprechende Vielzahl von unterschiedlichen Haltebügeln bereitzustellen. Es sei nur an die Anbringung von SignalSchaltkästen an Masten oder anderen Ständern hingewiesen.

Es ist Aufgabe der Erfindung, eine Vorrichtung der eingangs erwähnten Art zu schaffen, die universell sowohl für die Befestigung eines Schaltkastens oder dgl. an Rund-, als auch an einem Vierkantprofilabschnitt verwendbar ist, wobei zudem der Querschnitt des Profilabschnittes noch verschieden groß sein kann.

Diese Aufgabe wird nach der Erfindung dadurch gelöst, daß auf den C-Profilschienenabschnitt zwei Tragbügel aufsetzbar sind, die mit ihren Seitenschenkeln von dem C-Profilschienenabschnitt wegweisen, daß die Seitenschenkel der Tragbügel an einem Ende treppenförmig abgesetzt sind und am anderen Ende einen L-förmigen Absatz bilden, daß die Mittelschenkel der Tragbügel mittels abgewinkelter Laschen unverdrehbar im Schlitz des C-Profilschienenabschnittes verstellbar geführt sind, daß die Tragbügel im Mittelschenkel Bohrungen zum Aufsetzen auf Gewindebolzen aufweisen, die in im C-Profilschienenabschnitt verschiebbar geführte Schiebemuttern einschraubbar und an denselben arretierbar sind, wobei die Tragbügel wahlweise mit den treppenförmig abgesetzten Enden oder den mit L-förmigen Absätzen versehenen Enden gegeneinander gerichtet sind, daß die Tragbügel mittels Muttern auf den Gewindebolzen festlegbar sind, und daß als Haltebügel ein fortlaufend mit Vierkantdurchbrüchen versehener Spannbandabschnitt an ausgestanzten und ausgebogenen Haken von zwei Spannwinkeln eingehängt ist, die auf die aus den Muttern ragenden Enden der Gewindebolzen aufgeschoben und mittels Stellmuttern darauf bis zur Anlage des Spannbandabschnittes an dem gegen die Tragbügel abgestützten Rund-oder Vierkantprofilabschnitt verstellbar sind.

Die beiden Tragbügel lassen sich mit den beiden Gewindebolzen in verschieden großem Abstand an dem C-Profilschienenabschnitt befestigen und in Verbindung mit den treppenförmig abgesetzten Enden oder mit den mit den L-förmigen Absätzen versehenen Enden auf die Größe und Form des Rund-oder Vierkantprofilabschnittes anpassen, der sich an den beiden Tragbügeln abstützt. Nach dem Anpassen werden mit Muttern die Tragbügel fest mit den Gewindebolzen verbunden. Die an dem Spannbandabschnitt eingehängten Spannwinkel lassen sich mit Stellmuttern auf den über die Muttern hinausragenden Enden der Gewindebolzen so weit verstellen, bis der Spannbandabschnitt am Rund-oder Vierkantrohrabschnitt unter Spannung anliegt und diesen gegen die beiden Tragbügel verspannt. Die effektive Länge des Spannbandabschnittes kann durch Wahl von zwei Vierkantdurchbrüchen stufig verändert und grob vorgewählt werden, während mit der kontinuierlichen Verstellung der Spannwinkel auf den Gewindebolzen die Feineinstellung bis zur Verspannung vorgenommen wird. Bei der Anbringung eines Schaltkastens oder dgl. werden vorzugsweise zwei gleiche Vorrichtungen verwendet, um eine verwindungssteife Verbindung zu erhalten. Die Feineinstellung mit einem satten Anlegen des Spannbandabschnittes an den Rund-oder Vierkantprofilabschnitt wird dabei dadurch sichergestellt, daß der Spannbandabschnitt aus flexiblem Material besteht.

Die Ausrichtung der beiden Tragbügel ist nach einer Ausgestaltung so vorgenommen, daß bei einem Rundprofilabschnitt die Tragbügel mit ihren treppenförmig abgesetzten Enden gegeneinander gerichtet sind, während bei einem Vierkantprofilabschnitt die Tragbügel mit den mit dem L-förmigen Absatz versehenen Enden gegeneinander gerichtet sind.

Der Abstand der Tragbügel kann dadurch verändert werden, daß bei gelösten Gewindebolzen die Schiebemuttern in dem C-Profilschienenabschnitt verschiebbar sind und daß die eingestellten Stellungen der Gewindebolzen und damit der darauf befestigten Tragbügel beim Verspannen der Gewindebolzen gegen den Mittelschenkel des C-Profilschienenabschnittes arretierbar sind. Mit der Arretierung der Gewindebolzen an dem C-Profilschienenabschnitt wird der eingestellte Abstand und damit die angepaßte Stellung der Tragbügel festgelegt.

Ist nach einer Ausgestaltung vorgesehen, daß die Tragbügel eine Breite aufweisen, die der Breite des C-Profilschienenabschnittes entspricht, dann stützen sich die Tragbügel über die gesamte Fläche des Mittelschenkels an dem C-Profilschienenabschnitt ab.

Die Anpassung der Stützflächen der Tragbügel an die unterschiedliche Größe eines Rund-oder Vierkantprofilabschnittes wird dadurch optimal, daß die treppenförmig abgesetzten Enden der Seitenschenkel der Tragbügel eine Steigung von 45° einnehmen und daß die L-förmigen Absätze am anderen Ende der Seitenschenkel der Tragbügel von einem parallel zum Mittelschenkel verlaufenden Abschnitt in einen senkrecht zum Mittelschenkel stehenden Abschnitt übergehen. Dabei ist die Ausgestaltung so ausgeführt, daß beide Seitenschenkel des Tragbügels deckungsgleich ausgebildet sind und daß der Mittelschenkel des Tragbügels im Bereich beider Enden je eine Bohrung aufweist, damit der Rund-oder Vierkantprofilabschnitt an beiden Seitenschenkeln in gleicher Weise anliegt und abgestützt ist.

Ist nach einer Ausgestaltung vorgesehen, daß die zu dem Mittelschenkel des Tragbügels parallelen Abschnitte der L-förmigen Absätze einen Abstand vom Mittelschenkel aufweisen, der größer ist als die Höhe der Mutter, dann beeinträchtigt die Mutter zum Festlegen des Tragbügels an dem C-Profilschienenabschnitt die Abstützung eines Vierkantprofilabschnittes auf den L-förmigen Absätzen der Seitenwände des Tragbügels nicht.

Für das Aufbringen der Spannwinkel auf die Gewindebolzen und das Einhängen des Spannbandabschnittes ist nach einer weiteren Ausgestaltung vorgesehen, daß die Spannwinkel in einem Schenkel eine Bohrung zur Aufnahme des Gewindebolzens aufweisen, während am anderen Schenkel die Haken vorgesehen sind, welche mit ihrem freien Ende in Richtung der Tragbügel ausgerichtet sind. Dabei ist weiterhin so zu verfahren, daß die Spannwinkel so auf die Gewindebolzen aufgesetzt sind, daß die freien Schenkel mit den Haken nach der dem C-Profilschienenabschnitt abgekehrten Seite ausgerichtet und dem Rund-oder Vierkantprofilabschnitt zugekehrt sind, damit sich der Spannbandabschnitt über einen möglichst großen Umfangsbereich an den Rund-oder Vierkantprofilabschnitt anlegt.

Das Verspannen der Gewindebolzen an dem C-Profilschienenabschnitt wird in einfacher Weise dadurch ermöglicht, daß die dem C-Profilschienenabschnitt abgekehrten Ende der Gewindebolzen mit einem Schlitz für einen Schraubendreher versehen sind.

Die Erfindung wird anhand von in den Zeichnungen dargestellten Ausführungsbeispielen näher erläutert. Es zeigt:

Fig. 1 in Explosionsdarstellung die Teile der Vorrichtung zum Befestigen eines Schaltkastens an einem Rundprofilabschnitt und

Fig. 2 im Querschnitt eine Vorrichtung, die einen Schaltkasten an einem Vierkantprofilabschnitt festhält.

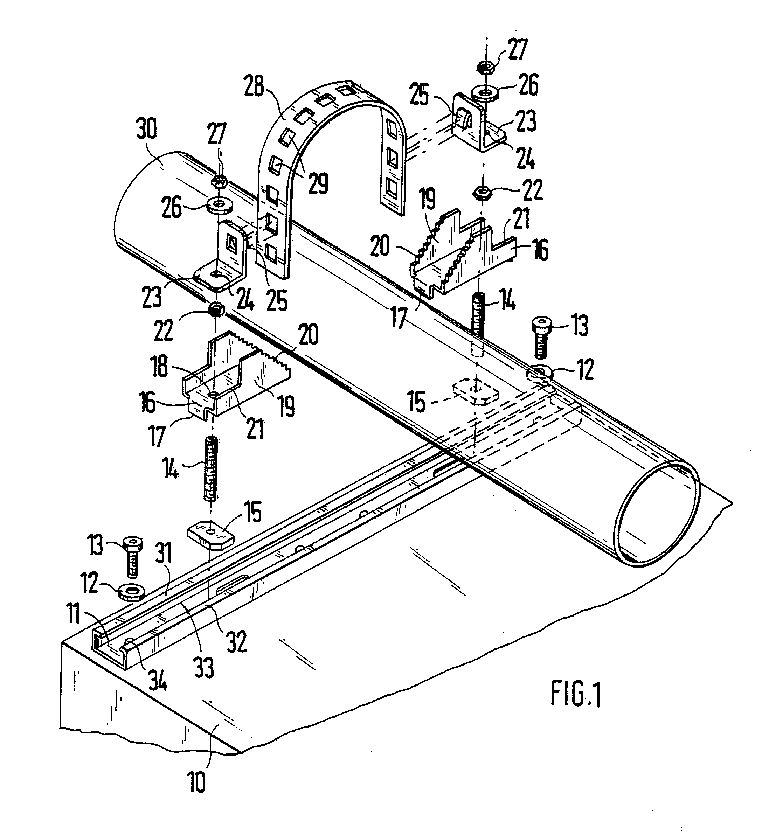

Wie Fig. 1 zeigt, ist an der Befestigungsfläche des Schaltkastens 10 mindestens eine Vorrichtung nach der Erfindung vorgesehen. Ein entsprechend den Abmessungen des Schaltkastens 10 abgelängter C-Profilschienenabschnitt 11 ist so mit der Befestigungsfläche verbunden, daß der durch die Endschenkel 31 und 32 begrenzte Schlitz 33 zugänglich ist. Zur Befestigung des C-Profilschienenabschnittes 11 dienen die Schrauben 13 und die Unterlegscheiben 12. Die Befestigungsfläche des Schaltkastens 10 ist wie der C-Profilschienenabschnitt 11 mit entsprechenden Befestigungsbohrungen 34 versehen.

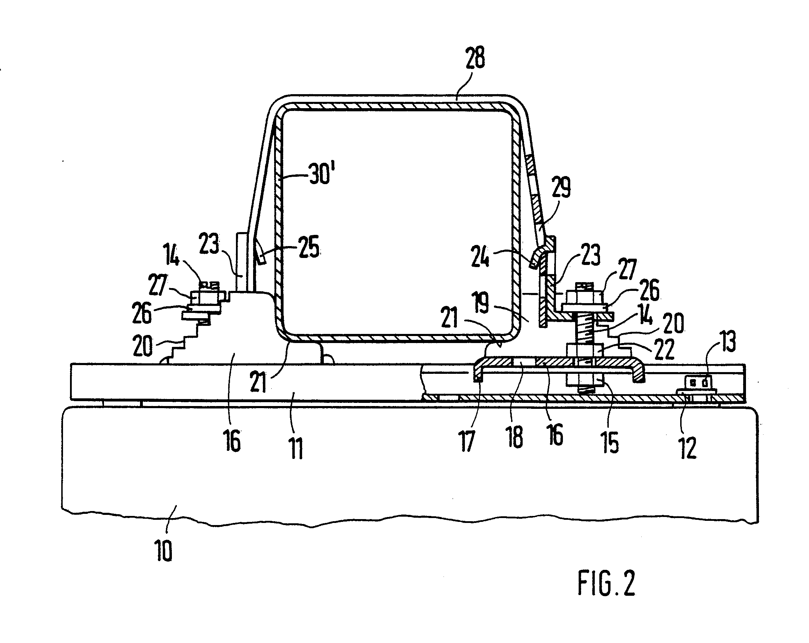

In dem C-Profilschienenabschnitt 11 sind zwei Schiebemuttern 15 verstellbar, in die Gewindebolzen 14 einschraubbar sind. Mit den Gewindebolzen 14 werden die Schiebemuttern 15 gegen die Endschenkel 31 und 32 verspannt, wenn das eingeschraubte Ende der Gewindebolzen 14 gegen den Mittelschenkel des C-Profilschienenabschnittes 11 verspannt wird. Der Schlitz am oberen Ende der Gewindebolzen 14 erlaubt das Verdrehen der Gewindebolzen 14 mit einem Schraubendreher. Diese Arretierung der Gewindebolzen 14 wird bei auf die Gewindebolzen 14 aufgesteckten Tragbügeln 16 vorgenommen, um den Abstand derselben an die Größe und Form des Rund-oder Vierkantprofilabschnittes 30 oder 30' (Fig. 2) anzupassen. Soll der Schaltkasten 10 an dem Rundprofilabschnitt 30 befestigt werden, dann werden die Tragbügel 16 so auf die Gewindebolzen 14 aufgesteckt, daß die treppenförmig unter 45 abgesetzten Enden 20 der Seitenwände 19 der Tragbügel 16 gegeneinander gerichtet sind. Der Mittelschenkel der Tragbügel 16 ist an beiden Enden mit einer abgewinkelten Lasche 17 versehen, die in den Schlitz 33 des C-Profilschienenabschnittes 11 eingreift und den Tragbügel 16 so unverdrehbar, jedoch verschiebbar an dem C-Profilschienenabschnitt 11 führt. Hat der Mittelschenkel in beiden Endbereichen eine Bohrung 18, dann läßt sich das zur Abstützung verwendete Ende der Seitenschenkel des Tragbügels 16 mit größerem Abstand zum Gewindebolzen 14 anordnen.

Wie Fig. 2 zeigt, werden die beiden Tragbügel 16 bei einem Vierkantprofilabschnitt 30' um 18° gedreht auf die Gewindebolzen 14 aufgesteckt, so daß die L-förmigen Absätze 21 gegeneinander gerichtet sind. Die Absätze 21 weisen einen Abschnitt auf, der parallel zum Mittelschenkel des Tragbügels 16 verläuft und an den sich ein senkrecht zum Mittelschenkel stehender Abschnitt anschließt. Mit den Muttern 22 werden die Tragbügel 16 auf den Gewindebolzen 14 festgelegt. Daher muß der Abstand der zu dem Mittelschenkel parallelen Abschnitte der Absätze 21 größer sein als die Höhe der Mutter 22, damit die Muttern 22 die Abstützung des Vierkantprofilabschnittes 30' auf den Absätzen 21 nicht beeinträchtigen. Die Enden der beiden Seitenschenkel 19 des Tragbügels 16 sind identisch und deckungsgleich ausgebildet, so daß der Rund-oder Vierkantprofilabschnitt 30 oder 30' an beiden Seitenschenkeln 19 in gleicher Weise abgestützt ist.

Die Verbindung wird dadurch vervollständigt, daß auf die aus den Muttern 22 herausragenden Teile der Gewindebolzen 14 die Spannwinkel 23 aufgebracht werden und zwar über die Bohrungen 24 in dem einen Schenkel. Der andere Schenkel des Spannwinkels 23 ist mit einem ausgestanzten und ausgebogenen Haken 25 versehen. Die Spannwinkel 23 sind so aufgesetzt, daß die Schenkel mit den Haken 25 einander zugekehrt und in Richtung von dem C-Profilschienenabschnitt 11 weg ausgerichtet sind. Die Unterlegscheiben 26 und die Stellmuttern 27 vervollständigen die Verbindung der Spannwinkel 23 auf den Gewindebolzen 14. Als Haltebügel wird ein Spannbandabschnitt 28 verwendet, der fortlaufend mit Vierkantdurchbrüchen 29 versehen ist. Ist der Rund-oder Vierkantprofilabschnitt 30 oder 30' an den beiden Tragbügeln 16 abgestützt, dann wird der flexible Spannbandabschnitt 28 an den Haken 25 der Spannwinkel 23 eingehängt und es wird durch die Wahl von zwei Vierkantdurchbrüchen 29 schon eine grobe Anpassung an die Größe des Rund-oder Vierkantprofilabschnittes 30 oder 30' vorgenommen. Durch Verdrehen der Stellmuttern 27 wird der Spannbandabschnitt gespannt, da sich die Spannwinkel 23 in Richtung zu den Tragbügeln 16 verstellen. Ist die Verstellung weit genug fortgeschritten, dann liegt der Spannbandabschnitt 28 unter Spannung an dem Rund-oder Vierkantprofilabschnitt 30 oder 30' an. Die Verbindung zwischen dem Schaltkasten 10 und dem Rund-oder Vierkantprofilabschnitt 30 oder 30' ist hergestellt.

Es ist eindeutig erkennbar, daß auch ein großflächiger Schaltkasten mit zwei oder mehr derartigen Vorrichtungen an einem Rund-oder Vierkantprofilabschnitt 30 oder 30' befestigt werden kann. Der Rundprofilabschnitt 30 ist in der Regel ein Rohrabschnitt und der Vierkantprofilabschnitt 30' ein Vierkantrohrabschnitt. Es liegt durchaus im Rahmen der Erfindung, auch zwei Paare von Tragbügeln 16 in einem C-Profilschienenabschnitt 11 anzuordnen und den Schaltkasten mit zwei Spannbandabschnitten 28 an zwei parallelen Rund-oder Vierkantrohrabschnitten zu befestigen.

## Ansprüche

1. Vorrichtung zum Befestigen eines Schaltkastens oder dgl. an einem Rund-oder Vierkantprofilabschnitt, bei der die Befestigungsfläche des Schaltkastens oder dgl. mindestens einen C-Profilschienenabschnitt trägt, mit dem die Enden eines den Rund-oder Vierkantprofilabschnitt umschließenden Haltebügels unter Verspannung an dem Rund-oder Vierkantprofilabschnitt verbindbar sind,
dadurch gekennzeichnet,
daß auf den C-Profilschienenabschnitt (11) zwei Tragbügel (16) aufsetzbar sind, die mit ihren Seitenschenkeln (19) von dem C-Profilschienenabschnitt (11) wegweisen,
daß die Seitenschenkel (19) der Tragbügel (16) an einem Ende treppenförmig (20) abgesetzt sind und am anderen Ende einen L-förmigen Absatz (21) bilden,
daß die Mittelschenkel der Tragbügel (16) mittels abgewinkelter Laschen (17) unverdrehbar im Schlitz (33) des C-Profilschienenabschnittes (11) verstellbar geführt sind,
daß die Tragbügel (16) im Mittelschenkel Bohrungen (18) zum Aufsetzen auf Gewindebolzen (14) aufweisen, die in im C-Profilschienenabschnitt (11) verschiebbar geführte Schiebemuttern (15) einschraubbar und an denselben arretierbar sind,
wobei die Tragbügel (16) wahlweise mit den treppenförmig abgesetzten Enden oder den mit L-förmigen Absätzen (21) versehenen Enden gegeneinander gerichtet sind,
daß die Tragbügel (16) mittels Muttern (22) auf den Gewindebolzen (14) festlegbar sind, und
daß als Haltebügel ein fortlaufend mit Vierkantdurchbrüchen (29) versehener Spannbandabschnitt (28) an ausgestanzten und ausgebogenen Haken (25) von zwei Spannwinkeln (23) eingehängt ist, die auf die aus den Muttern (22) ragenden Enden der Gewindebolzen (14) aufgeschoben und mittels Stellmuttern (27) darauf bis zur Anlage des Spannbandabschnittes (28) an dem gegen die Tragbügel (16) abgestützten Rund-oder Vierkantprofilabschnitt (30,30') verstellbar sind.

2. Vorrichtung nach Anspruch 1,
dadurch gekennzeichnet,
daß bei einem Rundprofilabschnitt (30) die Tragbügel (16) mit ihren treppenförmig abgesetzten Enden (20) gegeneinander gerichtet sind, während bei einem Vierkantprofilabschnitt (30') die Tragbügel (16) mit den mit dem L-förmigen Absatz (21) versehenen Enden gegeneinander gerichtet sind.

3. Vorrichtung nach Anspruch 1 oder 2,
dadurch gekennzeichnet,
daß bei gelösten Gewindebolzen (14) die Schiebemuttern (15) in dem C-Profilschienenabschnitt (11) verschiebbar sind und

daß die eingestellten Stellungen der Gewindebolzen (14) und damit der darauf befestigten Tragbügel (16) beim Verspannen der Gewindebolzen (14) gegen den Mittelschenkel des C-Profilschienenabschnittes (11) arretierbar sind.

4. Vorrichtung nach einem der Ansprüche 1 bis 3,
dadurch gekennzeichnet,
daß die Tragbügel (16) eine Breite aufweisen, die der Breite des C-Profilschienenabschnittes (11) entspricht.

5. Vorrichtung nach einem der Ansprüche 1 bis 4,
dadurch gekennzeichnet,
daß die treppenförmig abgesetzten Enden (20) der Seitenschenkel (19) der Tragbügel (16) eine Steigung von 45° einnehmen und
daß die L-förmigen Absätze (21) am anderen Ende der Seitenschenkel (19) der Tragbügel (16) von einem parallel zum Mittelschenkel verlaufenden Abschnitt in einen senkrecht zum Mittelschenkel stehenden Abschnitt übergehen.

6. Vorrichtung nach einem der Ansprüche 1 bis 5,
dadurch gekennzeichnet,
daß beide Seitenschenkel (19) des Tragbügels (16) deckungsgleich ausgebildet sind und
daß der Mittelschenkel des Tragbügels (16) im Bereich beider Enden je eine Bohrung (18) aufweist.

7. Vorrichtung nach einem der Ansprüche 1 bis 6,
dadurch gekennzeichnet,
daß die zu dem Mittelschenkel des Tragbügels (16) parallelen Abschnitte der L-förmigen Absätze (21) einen Abstand vom Mittelschenkel aufweisen, der größer ist als die Höhe der Mutter (22).

8. Vorrichtung nach einem der Ansprüche 1 bis 7,
dadurch gekennzeichnet,
daß die Spannwinkel (23) in einem Schenkel eine Bohrung (24) zur Aufnahme des Gewindebolzens (14) aufweisen, während am anderen Schenkel die Haken (25) vorgesehen sind, welche mit ihrem freien Ende in Richtung der Tragbügel (16) ausgerichtet sind.

9. Vorrichtung nach einem der Ansprüche 1 bis 8,
dadurch gekennzeichnet,
daß die Spannwinkel (23) so auf die Gewindebolzen (14) aufgesetzt sind, daß die freien Schenkel mit den Haken (25) nach der dem C-Profilschienenabschnitt (11) abgekehrten Seite ausgerichtet und dem Rund-oder Vierkantprofilabschnitt (30,30') zugekehrt sind.

10. Vorrichtung nach einem der Ansprüche 1 bis 9,
dadurch gekennzeichnet,
daß die dem C-Profilschienenabschnitt (11) abgekehrten Enden der Gewindebolzen (14) mit einem Schlitz für einen Schraubendreher versehen sind.

11. Vorrichtung nach einem der Ansprüche 1 bis 10,
dadurch gekennzeichnet,
daß der Spannbandabschnitt (28) aus flexiblem Material besteht.

FIG.1

FIG.2